# FASCICULE DE BREVET EUROPEEN

(11) **EP 2 812 632 B1**
(45) Date de publication et mention de la délivrance du brevet: **12.10.2016**
(21) Numéro de dépôt: 13706634.6
(22) Date de dépôt: 05.02.2013
(51) Int. Cl.: F23D 14/08, F23D 14/64, F23C 3/00, F23M 5/02, F23D 99/00, C03B 5/235

(54) **BRÛLEUR IMMERGE A INJECTEURS MULTIPLES**
TAUCHBRENNER MIT MEHREREN INJEKTOREN
SUBMERGED BURNER WITH MULTIPLE INJECTORS

(30) Priorité: 08.02.2012 FR 1251170
(43) Date de publication de la demande: 17.12.2014
(73) Titulaire: Saint-Gobain Isover, 92400 Courbevoie (FR)
(72) Inventeur: LEFRERE, Yannick, F-92240 Malakoff (FR); MARIE, Julien, F-92330 Sceaux (FR); GALLEY, David, F-75017 Paris (FR); CHESNEL, Sébastien, F-93290 Tremblay (FR); LOPEPE, Frédéric, F-93110 Rosny Sous Bois (FR); BOULANOV, Oleg, F-60180 Nogent sur Oise (FR)
(74) Mandataire: Pöpping, Barbara
(86) Numéro de dépôt international: PCT/FR2013/050237
(87) Numéro de publication internationale: WO 2013/117851

(56) Documents cités:
- EP-A2- 0 003 177
- EP-A2- 0 091 380
- WO-A2-2008/003909
- GB-A- 1 157 010
- US-A- 4 671 765
- US-A- 5 599 182
- US-A1- 2005 271 992

## Description

La présente invention concerne un nouveau brûleur comportant un alignement d'injecteurs, destiné à être utilisé en tant que brûleur immergé dans un four de fusion de verre ou de roche, en particulier à des températures suffisamment élevées pour permettre la fusion de roche.

La fusion de roche se fait traditionnellement dans des fours de type cubilot chauffés au coke à des températures au moins égales à 1460 °C.

La présente invention a pour but de proposer un nouveau type de brûleur permettant d'effectuer la fusion de la roche à haute température (environ 1500 °C) dans un four à brûleurs immergés utilisé jusqu'ici avant tout pour la fusion de verre.

La fusion de la roche nécessitant des températures significativement plus élevées que la fusion de verre, il est généralement impossible d'utiliser les mêmes installations pour ces deux types de matières premières.

Les deux principaux problèmes qui se posent lorsqu'on souhaite adapter un four de fusion usuel, utilisant des brûleurs immergés, à la fusion de roche est
- l'usure excessive des céramiques réfractaires servant classiquement à l'isolation thermique et à la protection des parois du four et
- la difficulté d'utiliser l'énergie thermique apportée par les brûleurs immergés de façon suffisamment efficace pour atteindre les températures élevées requises, sans gaspillage excessive d'énergie.

L'usure des céramiques réfractaires peut être évitée grâce à l'utilisation d'un four à parois métalliques nues, refroidies en continu par un système de circulation d'un liquide de refroidissement (chemise d'eau, en anglais *waterjacket*). Il se pose alors de façon particulièrement aiguë le problème de l'obtention d'une température des matières en fusion particulièrement élevée, de l'ordre de 1500 °C, dans un four avec des parois refroidies activement.

La Demanderesse a découvert qu'il n'était toutefois pas impossible de satisfaire simultanément à ces deux contraintes contradictoires grâce à la formation, au niveau de l'interface entre les parois métalliques nues refroidies et la matière en fusion, d'une couche de cristaux de verre ou de roche jouant à la fois le rôle d'isolant thermique et le rôle de couche de protection des parois métalliques contre l'oxydation.

Les recherches et essais menés par la Demanderesse en vue de la mise au point d'un four à brûleurs immergés, approprié à la fusion de la roche à des températures d'environ 1500 °C, ont toutefois montré qu'avec des brûleurs immergés usuels il était malheureusement impossible de maintenir cette couche solide d'isolation à proximité immédiate des brûleurs immergés et que la zone de la sole au voisinage des brûleurs subissait, en quelques heures ou jours seulement, des dégradations par oxydation inacceptables.

Ces dégradations oxydatives étaient dues à la nécessité d'injecter une puissance énergétique suffisante au moyen d'un ou de plusieurs brûleurs immergés, à l'absence de céramiques réfractaires, et à l'existence de forts courants de convection de la matière en fusion à proximité de la flamme immergée, inhérente à l'utilisation de brûleurs immergés. Une flamme immergée vacillante et de forte puissance entraîne ainsi la fusion de la couche solidifiée à proximité et l'oxydation de la sole métallique sous-jacente.

Le nouveau brûleur immergé proposé dans la présente demande a permis de limiter considérablement, voire dans certains cas de supprimer, ces dégradations oxydatives de la sole métallique du four. Grâce à une combinaison originale de différents moyens techniques, décrits plus en détail ci-après, la Demanderesse a en effet réussi à diviser et stabiliser la flamme immergée d'un tel brûleur et à maintenir à proximité immédiate de cette flamme immergée une couche de protection formée par solidification locale du verre ou de la roche en fusion, tout en injectant une quantité totale suffisante d'énergie et en optimisant le transfert thermique entre la flamme du brûleur et la matière en fusion.

Un brûleur immergé avec une pluralité d'injecteurs alignés en deux rangs est déjà connu du brevet GB 1157010. Il s'agit d'un brûleur air/gaz dont il est affirmé qu'il permet d'atteindre des températures de 1500 °C. Ce brûleur ne présente toutefois pas de chambre de mélange et le combustible gazeux est mélangé avec le comburant (air) bien avant l'injection dans la matière fondue ce qui présente des risques considérables lorsque la teneur en oxygène du comburant est élevée. Un autre brûleur avec une pluralité d'injecteurs est connu du brevet US 4671765 A1.

L'utilisation d'un brûleur immergé pour la combustion d'un mélange air/gaz est par ailleurs insatisfaisante d'un point de vue de l'efficacité énergétique. En effet, l'efficacité de transfert énergétique d'une flamme air/gaz dans un bain de verre en fusion à 1500 °C est d'environ 27 % seulement tandis qu'elle est égale à environ 75 % pour une flamme O₂/gaz.

Cet avantage d'une meilleure efficacité énergétique s'accompagne toutefois d'une augmentation des problèmes d'oxydation des parois du four et du brûleur lui-même, ces problèmes étant d'autant plus importants que la teneur en oxygène du comburant et la température de la flamme sont élevées. Or, une flamme méthane/O₂ présente une température d'environ 3000 K, considérablement plus élevée que la température d'une flamme méthane/air qui est à seulement 2200 K environ.

La principale idée à la base de la présente invention a donc été de diviser la flamme extrêmement chaude d'un brûleur immergé fonctionnant avec un comburant considérablement plus riche en oxygène que l'air, et de refroidir le plus efficacement possible la zone du brûleur immédiatement adjacente à la base de cette pluralité de petites flammes.

Le brûleur de la présente invention comporte ainsi une multitude d'injecteurs individuels, alimentés chacun individuellement par au moins une conduite d'alimentation en combustible et au moins une conduite d'alimentation en comburant, le combustible et le comburant étant mélangés dans une chambre de mélange, grâce à l'écoulement tangentiel de ces deux flux gazeux, avant d'être éjectés et brûlés immédiatement après la sortie de la chambre de mélange. Il est important de comprendre que la multiplication et la miniaturisation des chambres de mélange, rendues possibles grâce à une géométrie simple et astucieuse, a permis d'utiliser un brûleur immergé avec un mélange gaz/oxygène sans risque d'explosion et avec une grande efficacité énergétique, tout en limitant la dégradation par oxydation des surfaces métalliques immédiatement adjacentes aux flammes.

La présente invention a donc pour objet un brûleur immergé, correspondant à la revendication 1.

La présente invention a également pour objet un four comprenant au moins un tel brûleur en tant que brûleur immergé, ainsi qu'un procédé de fusion de matières vitrifiables utilisant un tel four.

Comme expliqué en introduction, l'alignement d'un grand nombre d'injecteurs, chaque injecteur étant une chambre de mélange avec une géométrie particulière, est au coeur de la présente invention.

L'homme du métier, grâce à l'explication détaillée qui suivra, est en mesure de déterminer le nombre approprié d'injecteurs par brûleur. La Demanderesse a obtenu de bons résultats avec des brûleurs comprenant entre 20 et 100, de préférence entre 30 et 80 injecteurs par brûleur.

Bien qu'il soit en principe envisageable que les injecteurs soient alignés en plusieurs rangées parallèles les unes aux autres, il est préféré, pour des raisons évidentes de simplicité de la géométrie du brûleur que celui ne comporte qu'un seul alignement d'injecteurs. Autrement dit, les injecteurs sont de préférence tous alignés sur une seule droite.

La chambre de mélange cylindrique de chaque injecteur débouche à la surface du brûleur par son orifice d'éjection, avantageusement de forme circulaire. Tous les orifices d'éjection d'un alignement d'injecteurs ont de préférence sensiblement le même diamètre, ce diamètre étant de préférence compris entre 2 et 20 mm, en particulier entre 5 et 10 mm.

La distance séparant deux orifices d'éjection est avantageusement identique ou proche du diamètre de ces orifices, le rapport distance/diamètre étant de préférence compris entre 0,7 et 5, en particulier entre 0,9 et 3 et plus préférentiellement encore entre 1 et 2.

La hauteur du cylindre formant chacune des chambres de mélange est de préférence comprise entre 12 et 30 mm, en particulier entre 14 et 25 mm et idéalement entre 15 et 23 mm. Cette hauteur du cylindre est un paramètre important pour la qualité de la flamme et l'efficacité du transfert thermique. En effet, elle détermine le temps de séjour du mélange gazeux dans l'injecteur. Lorsque ce temps de séjour est trop long, le mélange gazeux s'enflammera trop à l'intérieur de la chambre de mélange ce qui se traduit par une dégradation thermique de la chambre de mélange. A l'inverse, des hauteurs trop faibles (temps de séjour trop court) ne permettent pas au mélange gazeux de brûler suffisamment et fournir ainsi une chaleur suffisante au maintien d'une flamme stable en sortie des injecteurs. On risque alors le décrochage des flammes et des réactions de combustion incomplètes.

La Demanderesse a constaté par exemple que des chambres de mélange d'un diamètre de 5 mm donnaient à la fois des flammes bien accrochées et un transfert thermique efficace pour une hauteur de 15 mm.

La géométrie des conduites d'alimentation en combustible et comburant a également une grande importance. L'écoulement gazeux à l'intérieur de la chambre de mélange doit être régulier et permettre un mélange efficace des gaz. Pour cela, les conduites d'alimentation en combustible et en comburant débouchent avantageusement dans l'enveloppe du cylindre à proximité de la base de celui-ci, de préférence dans le quart inférieur de l'enveloppe, et en des points diamétralement opposés.

Les conduites d'alimentation en combustible et en carburant rétrécissent avantageusement dans le sens de l'écoulement du flux gazeux qu'elles transportent. Autrement dit, la section des conduites d'alimentation est de préférence minimale au point où elles débouchent dans la chambre de mélange.

La direction d'injection des gaz (combustible/comburant) dans la chambre de mélange a également une grande importance. La Demanderesse a en effet constaté qu'il était indispensable d'éviter une injection selon une direction radiale qui aboutissait à de fortes turbulences à l'intérieur de la chambre de mélange et à une instabilité de la flamme. C'est la raison pour laquelle l'injection du carburant et du comburant doit se faire selon une direction tangentielle, l'écoulement tangentiel du mélange gazeux créant un vortex régulier.

Pour garantir la régularité d'écoulement du vortex, il est important que les vitesses d'injection des deux gaz à mélanger soient à peu près identiques. L'homme du métier est aisément capable de calculer, en fonction de la stoechiométrie de combustion souhaitée et de la composition chimique du combustible et du comburant, le rapport approprié des débits de chacun des gaz. Pour que les vitesses d'injection des deux gaz soient à peu près équivalentes, le rapport des sections transversales des deux conduites d'alimentation - à l'endroit où elles débouchent dans la chambre de mélange - doit refléter le rapport des débits gazeux. A titre d'exemple, lorsque le débit volumique du comburant est deux fois plus important que le débit volumique du combustible, la section transversale de la conduite d'alimentation en comburant doit être deux fois plus importante que la section transversale de la conduite d'alimentation en combustible.

A titre d'exemple, pour un mélange CH₄/O₂ (stoechiométrie de combustion 1:2) le rapport du diamètre de la conduite d'alimentation en O₂ au diamètre de la conduite d'alimentation en CH₄ est de 2^{1/2}.

Le brûleur de la présente invention présente donc autant de chambres de mélange que de conduites d'alimentation en combustible et de conduites d'alimentation en comburant. L'ensemble des conduites d'alimentation en combustible dérivent de préférence d'une conduite commune appelée dans la présente demande « arrivée de combustible ». De façon analogue, l'ensemble des conduites d'alimentation en comburant dérivent d'une conduite commune appelée « arrivée de comburant ». Chacune des deux conduites d'arrivée comporte de préférence un dispositif de régulation du débit des gaz.

Par ailleurs, chacune des deux conduites d'arrivée communes est dimensionnée de manière à distribuer les combustible et comburant avec une pression constante dans la série de conduites d'alimentation individuelles. A cette fin, les conduites d'arrivée communes sont conçues avec une section transversale d'autant plus faible que les injecteurs sont éloignés du dispositif de régulation du débit des gaz. Ce rétrécissement des conduites d'arrivée de combustible et de comburant peut être obtenu grâce à une inclinaison de la cloison inférieure des conduites, par exemple de la manière décrite dans GB 1157010. Par ailleurs les conduites d'arrivée communes peuvent comporter des cloisons partielles, ou demi-cloisons, qui les divisent en plusieurs sous-compartiments ou sections communicant les uns avec les autres.

Le matériau formant le brûleur de la présente invention est de préférence de l'acier inox réfractaire, en particulier de l'acier inox réfractaire 310.

Comme expliqué en introduction, dans les fours de fusion de la présente invention, les matériaux réfractaires isolants sont avantageusement remplacés par une couche isolante de verre solidifié formée à la surface des parois métalliques nues. On comprendra aisément qu'il est très intéressant de favoriser la formation d'une telle couche isolante et protectrice également à la surface du brûleur. Pour cela, le brûleur de la présente invention comprend avantageusement différents moyens techniques destinés à stabiliser une telle couche cristalline.

Le premier de ces moyens est le système de conduites permettant de faire circuler un fluide de refroidissement, de préférence de l'eau, à l'intérieur du brûleur. Ces conduites s'étendent de préférence juste en dessous de la surface supérieure du brûleur, de part et d'autre de l'alignement des injecteurs. Elles devraient en outre permettre de refroidir les chambres de mélange et les conduites d'alimentation, ainsi que les conduites d'arrivée des combustibles et comburant.

La formation de la couche solide est favorisée en outre par la présence, de part et d'autre de l'alignement des injecteurs, de flancs métalliques massifs disposés parallèlement à et tout le long de celui-ci. Ces flancs métalliques sont ascendants en partant les injecteurs, c'est-à-dire leur épaisseur augmente avec la distance par rapport aux injecteurs.

Pour une pente droite, l'angle par rapport à l'horizontale est de préférence compris entre 20 et 50 °, en particulier entre 25 et 45 °.

Ces flancs métalliques ascendants comportent, de préférence, à leur surface une pluralité d'éléments en saillie destinés à favoriser l'accrochage des éléments de verre solidifié et à les empêcher de glisser vers le bas, en direction de l'alignement des injecteurs. Ces éléments en saillie sont de préférence répartis assez régulièrement sur toute la surface des flancs. Il peut s'agir par exemple de pics ou de cloisons, ces dernières étant de préférence sensiblement perpendiculaires à la pente des flancs métalliques.

Dans un mode de réalisation préféré du brûleur de la présente invention, les flancs métalliques ont la forme d'un escalier, ou de gradins, avec une pluralité de marches. Les surfaces horizontales définies par les marches diminuent en effet considérablement le risque de glissement de la couche de verre solidifiée. Les flancs métalliques peuvent comporter, comme le corps du brûleur, un système de conduites internes permettant de faire circuler un liquide de refroidissement, ou bien le système de conduites de refroidissement peut s'étendre jusque dans les flancs métalliques massifs. Il ne s'agit toutefois pas d'un mode de réalisation préféré de l'invention.

Les flancs métalliques situés de part et d'autre de l'alignement d'injecteurs ont un double rôle : Ils constituent, d'une part, une réserve de matière qui s'oxydera avant que le corps du brûleur ne soit attaqué par la corrosion. Par ailleurs, les flancs métalliques créent autour de l'alignement d'injecteurs une zone protégée où les seuls flux de la matière en fusion sont les courants de convection créés par la pluralité de flammes. Les flammes mises à l'abri des flux d'écoulement sont ainsi stabilisées et dégradent moins la surface métallique du brûleur et des flancs à proximité.

Il existe une distance optimale entre l'alignement d'injecteurs et les flancs métalliques massifs. Cette distance entre l'alignement des injecteurs et les flancs métalliques massifs est de préférence comprise entre 20 et 60 mm, en particulier entre 25 et 40 mm, et idéalement voisine de 30 mm. Lorsque cette distance est trop faible, c'est-à-dire inférieure à 20 mm, la corrosion des flancs par les flammes très chaudes est favorisée. A l'inverse, une distance trop importante, significativement supérieure à 60 mm, ne permettra pas de mettre les flammes à l'abri des courants d'écoulement de la matière en fusion et de créer les conditions pour une stabilisation des flammes.

Dans la zone qui sépare l'alignement d'injecteurs des flancs métalliques se trouvent avantageusement des éléments en saillie, tels que des dents, servant, à l'instar des éléments en saillie sur les flancs métalliques, à favoriser la fixation de la couche de verre solidifié en contact avec la surface métallique du brûleur.

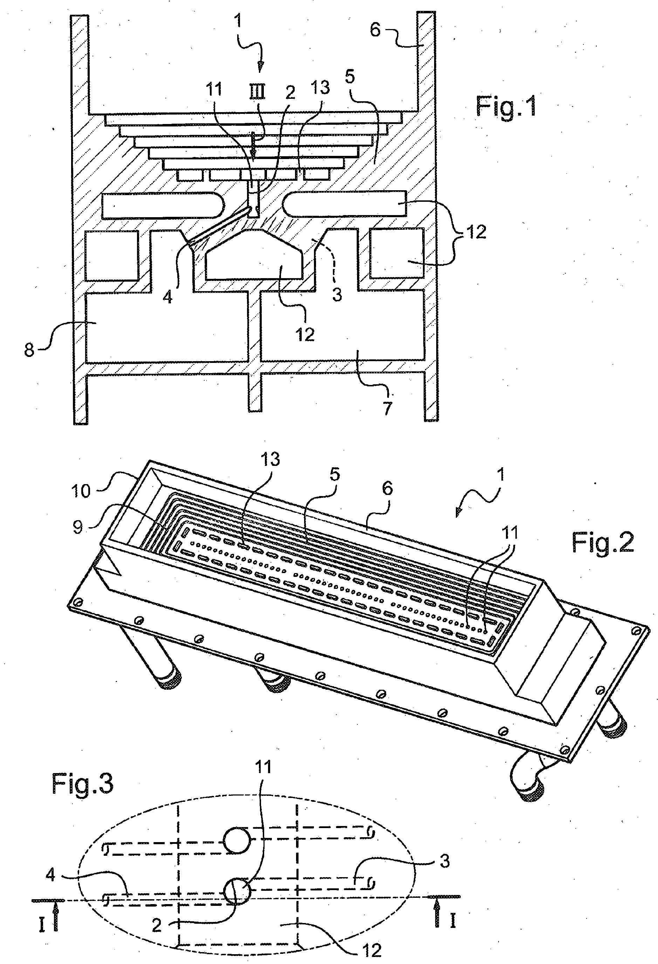

Des flancs métalliques massifs peuvent également être présents aux extrémités de l'alignement d'injecteurs, fermant ainsi la « vallée » formée par les flancs métalliques qui longent l'alignement d'injecteurs. Le brûleur de la présente invention comprend donc avantageusement au niveau de chacune des extrémités de l'alignement des injecteurs, un flanc métallique massif ascendant formant un angle droit avec les flancs métalliques massifs disposés parallèlement à l'alignement d'injecteurs. Ce mode de réalisation avantageux est représenté à la Figure 2.

La Demanderesse a constaté que l'efficacité des flancs métalliques massifs pouvait être encore renforcée par la présence de cloisons de protection verticales en contact avec les flancs métalliques et s'étendant au-delà de la crête de ceux-ci, de préférence sur toute la longueur des flancs métalliques massifs. Ces cloisons de protection ont de préférence une hauteur, exprimée par rapport à la crête des flancs métalliques, comprise entre 5 et 10 cm et une épaisseur comprise entre 0,5 et 2,5 cm, de préférence entre 1 et 1,5 cm. Ces cloisons sont avantageusement présentes non seulement sur les flancs métalliques parallèles à l'alignement d'injecteurs, mais également sur ceux situés aux extrémités de l'alignement d'injecteurs.

La présente invention a pour objet non seulement un brûleur à flammes multiples tel que décrit ci-avant, mais également un four de fusion de verre ou de roche avec
- une zone d'introduction des matières vitrifiables,
- une zone de sortie de la matière fondue et, entre ces zones,
- une zone d'écoulement de la matière fondue,
ledit four comprenant, dans la zone d'écoulement de la matière fondue, au moins un brûleur immergé selon l'invention, ledit brûleur étant disposé de façon à ce que la direction d'alignement des injecteurs soit essentiellement perpendiculaire à la direction d'écoulement de la matière fondue.

Le brûleur est bien entendu utilisé en tant que brûleur immergé c'est-à-dire il est installé au niveau de la sole du four, de préférence de manière à ce que les orifices d'éjection soient à peu près au même niveau que la surface de la sole du four, les flancs métalliques et cloisons étant en relief par rapport à la surface de la sole.

Le brûleur peut avoir une longueur totale légèrement inférieure, mais proche de la largeur du four. Le four peut alors comprendre un seul brûleur immergé selon l'invention couvrant presque toute la largeur du four, ou bien plusieurs brûleurs immergés parallèles situés les uns après les autres dans la direction d'écoulement de la matière en fusion.

On pourrait également envisager des brûleurs immergés suffisamment courts pour être alignés dans le sens de la largeur du four, l'ensemble des brûleurs couvrant essentiellement toute la largeur du four.

D'autres configurations sont envisageables et l'homme du métier saura les choisir de manière à obtenir la fusion homogène des matières vitrifiables.

Comme expliqué en introduction, le four de la présente invention est de préférence utilisé pour la fusion de roche à des températures élevées, de l'ordre de 1400 à 1600 °C, supérieures à celles nécessaires à la fusion de verre. A ces températures, les céramiques réfractaires utilisées classiquement en tant que matériaux d'isolation thermique dans des fours à verre, sont soumises à une usure excessive.

Bien que rien ne s'oppose en principe à l'utilisation des brûleurs de la présente invention dans des fours usuels comportant des matériaux isolants réfracteurs, ces brûleurs sont particulièrement utiles dans des fours fonctionnant à haute température. Dans un mode de réalisation préféré, le four de la présente invention comporte par conséquent des parois métalliques nues, par exemple en acier chaudière A42CP, directement en contact avec la matière en fusion et est essentiellement dépourvu de matériaux isolants en céramique réfractaire, au moins dans les zones immergées du four qui sont en contact avec le bain de verre ou de roche. La voute du four de la présente invention peut éventuellement être isolée au moyen de matériaux réfractaires, bien qu'il ne s'agisse pas d'un mode de réalisation préféré.

Le four, comme le brûleur, comporte de préférence au moins un système de conduites internes permettant de faire circuler un fluide de refroidissement à l'intérieur des parois du four. Ces conduites refroidissent avantageusement l'ensemble des zones en contact avec le bain des matières en fusion, dépourvues de matériaux isolants réfractaires.

Enfin, la présente invention a pour objet un procédé de fusion de matières vitrifiables utilisant un four selon la présente invention, ledit procédé comprenant,
- l'introduction de matières vitrifiables dans la zone d'introduction de matières vitrifiables du four,
- l'alimentation du ou des brûleurs immergés avec un combustible gazeux, de préférence du gaz naturel, et avec un comburant gazeux, de préférence de l'oxygène,
- le soutirage de la matière fondue dans la zone de sortie des matières fondues, et
- la circulation d'un liquide de refroidissement, de préférence de l'eau, dans les systèmes de conduites prévus à cet effet dans les parois du four et/ou dans le brûleur.

Les matières vitrifiables comprennent avantageusement une certaine fraction de roche, de préférence de la roche basaltique. Cette fraction est avantageusement au moins égale à 40 %.

La présence de roche, en particulier de roche basaltique, se traduit généralement par une réduction considérable de la viscosité de la matière en fusion. La roche basaltique pure a typiquement une viscosité à la température de *liquidus* inférieure à 100 poises, alors que la viscosité des verres fondus à base de silice est typiquement comprise entre 100 et 1000 poises. Le procédé de la présente invention utilisant un brûleur à injecteurs multiples miniaturisés tel que décrit ci-avant est particulièrement avantageux pour des matières en fusion ayant une faible viscosité. En effet, lorsqu'on utilise dans de telles matières fondues peu visqueuses des brûleurs immergés classiques, les bulles de fumées formées qui sont de grande taille remontent trop rapidement à la surface du bain de verre et provoquent des projections indésirables sur la voûte du four. Par ailleurs, lors de ce passage trop rapide à travers la matière en fusion, le transfert de la chaleur entre la bulle de fumée chaude et le verre ne se fait que partiellement et la fumée s'échappe dans le laboratoire avant d'avoir atteint la température du verre en fusion. L'utilisation d'un brûleur libérant une multitude de bulles de fumée de plus petite taille, ralentit l'ascension des bulles de fumée, augmente la surface de contact entre les bulles et le verre et améliore ainsi l'efficacité du transfert thermique. Dans le procédé de fusion de la présente invention, la matière fondue a par conséquent de préférence une viscosité à la température de *liquidus* inférieure à 200 poises, de préférence inférieure à 100 poises.

La roche basaltique nécessitant des températures de fusion supérieures à celles du verre à base de silice, la température de la roche en fusion, immédiatement en amont de la zone de sortie du verre fondu, est de préférence comprise entre 1400 °C et 1600 °C, en particulier entre 1450 °C et 1500 °C.

Grâce au grand nombre de brûleurs de faible taille, la puissance individuelle de chaque brûleur peut être limitée. La Demanderesse a obtenu de bons résultats de fusion d'une roche basaltique (roche TA9) à une température de 1500 °C avec une pluralité d'injecteurs (50 injecteurs) délivrant chacun 12 kW. Des injecteurs délivrant une puissance individuelle de 24 kW ont également été testés. Le procédé selon l'invention fonctionne par conséquent avantageusement avec des injecteurs délivrant chacun une puissance comprise entre 10 et 80 kW, de préférence entre 12 et 50 kW et en particulier entre 12 et 30 kW.

Plus la puissance par injecteur sera faible, plus la hauteur de bain nécessaire à un transfert thermique total (température de la fumée émergeant du bain de verre = température du bain de verre) sera faible.

La présente invention est à présent illustrée à l'aide des figures annexées dans lesquelles,
la figure 1 montre une vue en coupe transversale du brûleur de la présente invention ;
la figure 2 montre une vue en perspective d'un brûleur selon l'invention ;
et la figure 3 montre une vue par le dessus de deux injecteurs.

Plus particulièrement, la figure 1 montre une coupe transversale d'un brûleur 1 selon l'invention, le plan de coupe passant par un injecteur comportant une chambre de mélange 2 cylindrique débouchant par l'orifice d'éjection 11 à la surface du brûleur. Dans la chambre de mélange 2 débouchent une conduite d'alimentation en comburant 4, située dans le plan de coupe, et une conduite d'alimentation en combustible 3 en dehors du plan de coupe. Les conduites d'alimentation en combustible 3 et en comburant 4 relient la chambre de mélange respectivement à une conduite d'arrivée de combustible 7 et une conduite d'arrivé de comburant 8, situées dans la partie inférieure du brûleur 1. Des conduites 12 permettant de faire circuler un liquide de refroidissement à l'intérieur du brûleur parcourent celui-ci sur presque toute sa longueur. De part et d'autre des injecteurs se trouvent des flancs métalliques massifs 5 en forme d'escalier ou de gradins. En contact avec des flancs métalliques massifs 5, des cloisons de protection 6 verticales s'étendent bien au-delà du point le plus élevé des flancs métalliques. Entre les flancs métalliques 5 et l'injecteur, des dents 13 font saillie du corps du brûleur. Ces dents servent principalement à stabiliser la couche de verre solidifié formée à la surface du brûleur, à proximité directe des injecteurs et donc de la flamme.

On retrouve un certain nombre de ces éléments sur la figure 2, à savoir les cloisons de protection 6, les flancs métalliques massifs 5, les dents 13 et, au creux de cette structure, un alignement de plusieurs dizaines d'injecteurs dont seuls les orifices d'éjection 11 sont visibles. Cette figure montre en outre, à chacune des extrémités du brûleur 1, des flancs métalliques massifs 9 et des cloisons de protection 10 en continuation respectivement avec les flancs métalliques 5 et les cloisons 6 et formant un angle droit avec ces derniers.

Enfin, la figure 3 montre plus clairement la géométrie de la chambre de mélange 2 d'un injecteur. Les conduites d'alimentation en combustible 3 et en comburant 4 débouchent dans la chambre de mélange en des points diamétralement opposés. Elles injectent le gaz qu'elles transportent non pas selon une direction radiale, mais selon une direction tangentielle de manière à créer un écoulement tangentiel des gaz et la formation d'un vortex de mélange gazeux qui quitte la chambre par l'orifice d'éjection 11. La conduite de refroidissement 12 est représentée par transparence en dessous des chambres de mélange 2.

## Revendications

1. Brûleur (1) immergé pour four de fusion de verre ou de roche comprenant
- une pluralité d'injecteurs alignés, chaque injecteur comprenant une chambre de mélange (2) en forme de cylindre, avec un orifice d'éjection (11), une conduite d'alimentation en combustible (3) et une conduite d'alimentation en comburant (4) débouchant dans la chambre de mélange au niveau de l'enveloppe du cylindre en des points diamétralement opposés et selon une direction provoquant un écoulement tangentiel du combustible et du comburant par rapport à l'enveloppe du cylindre, et
- un système de conduites (12) permettant de faire circuler un fluide de refroidissement à l'intérieur du brûleur.

2. Brûleur immergé selon la revendication 1, **caractérisé par le fait qu'**il comprend en outre, de part et d'autre de l'alignement d'injecteurs, disposés parallèlement à et tout le long de celui-ci, des flancs métalliques massifs (5) ascendant depuis les injecteurs.

3. Brûleur immergé selon la revendication 2, **caractérisé par le fait qu'**il comprend en outre des cloisons de protection (6) verticales en contact avec les flancs métalliques massifs (5) et s'étendant au-delà de la crête des flancs métalliques massifs.

4. Brûleur selon l'une quelconque des revendications précédentes, **caractérisé par le fait que** les conduites d'alimentation en combustible et en comburant débouchent dans l'enveloppe du cylindre à proximité de la base de celui-ci, de préférence dans le quart inférieur de l'enveloppe du cylindre.

5. Brûleur selon l'une quelconque des revendications précédentes, **caractérisé par le fait que** les conduites d'alimentation en combustible (3) dérivent d'une conduite d'arrivée de combustible (7) commune, et les conduites d'alimentation en comburant (4) dérivent d'une conduite d'arrivée de comburant (8) commune, chacune des conduites d'arrivée (7,8) comportant un dispositif de régulation de débit.

6. Brûleur selon l'une quelconque des revendications 2 à 5, **caractérisé par le fait que** les flancs métalliques (5) comportent à leur surface une pluralité d'éléments en saillie, répartis de préférence régulièrement sur toute la surface des flancs.

7. Brûleur selon l'une quelconque des revendications 2 à 6, **caractérisé par le fait que** les flancs métalliques (5) ont une forme d'escalier avec une pluralité de marches.

8. Brûleur selon l'une quelconque des revendications 2 à 7, **caractérisé par le fait qu'**il comprend en outre, au niveau de chacune des extrémités de l'alignement des injecteurs, un flanc métallique massif (9) ascendant formant un angle droit avec les flancs métalliques massifs (5) disposés parallèlement à l'alignement d'injecteurs, et éventuellement une cloison de protection (10) verticale en contact avec ce flanc métallique massif (9) et s'étendant au-delà de la crête de celui-ci.

9. Brûleur selon l'une quelconque des revendications précédentes, **caractérisé par le fait que** l'orifice d'éjection (11) a un diamètre compris entre 2 et 20 mm, de préférence entre 5 et 10 mm.

10. Brûleur selon l'une quelconque des revendications précédentes, **caractérisé par le fait que** la chambre de mélange (2) en forme de cylindre a une hauteur comprise entre 12 et 30 mm, de préférence entre 14 et 25 mm et en particulier entre 15 et 23 mm.

11. Brûleur selon l'une quelconque des revendications précédentes, **caractérisé par le fait que** la distance entre l'alignement des injecteurs et les flancs métalliques massifs est comprise entre 20 et 60 mm, de préférence entre 25 et 40 mm, et idéalement voisine de 30 mm.

12. Four de fusion de verre ou de roche avec une zone d'introduction des matières vitrifiables, une zone de sortie de la matière fondue et, entre ces zones, une zone d'écoulement de la matière fondue, ledit four comprenant dans la zone d'écoulement de la matière fondue au moins un brûleur immergé selon l'une quelconque des revendications précédentes, ledit brûleur étant disposé de façon à ce que la direction d'alignement des injecteurs est essentiellement perpendiculaire à la direction d'écoulement de la matière fondue.

13. Four de fusion de verre ou de roche selon la revendication 12, **caractérisé par le fait qu'**il a des parois métalliques et est essentiellement dépourvu de matériaux isolants en céramique réfractaire, au moins au niveau des zones immergées.

14. Four de fusion de verre ou de roche selon l'une quelconque des revendications 11 à 13, **caractérisé par le fait qu'**il comporte au moins un système de conduites permettant de faire circuler un fluide de refroidissement à l'intérieur des parois du four.

15. Procédé de fusion de matières vitrifiables utilisant un four selon l'une quelconque des revendications 12 à 14, ledit procédé comprenant,
- l'introduction de matières vitrifiables dans la zone d'introduction de matières vitrifiables du four,
- l'alimentation du ou des brûleurs immergés avec un combustible gazeux, de préférence du gaz naturel, et avec un comburant gazeux, de préférence de l'oxygène,
- le soutirage de la matière fondue dans la zone de sortie des matières fondues, et
- la circulation d'un liquide de refroidissement, de préférence de l'eau, dans les systèmes de conduites prévus à cet effet dans les parois du four et/ou dans le brûleur.

16. Procédé de fusion de matières vitrifiables selon la revendication 15, **caractérisé par le fait que** les matières vitrifiables comprennent de la roche, de préférence de la roche basaltique.

17. Procédé de fusion de matières vitrifiables selon la revendication 15 ou 16, **caractérisé par le fait que** la température de la roche fondue, immédiatement en amont de la zone de sortie du verre fondu, est comprise entre 1400 °C et 1600 °C, de préférence entre 1450 et 1500 °C.

## Patentansprüche

1. Tauchbrenner (1) für einen Glass- oder Steinschmelzofen, umfassend
- eine Mehrzahl von fluchtend angeordneten Injektoren, wobei jeder Injektor eine zylinderförmige Mischkammer (2) mit einer Ausstoßöffnung (11), eine Brennstoffzufuhrleitung (3) und eine Oxidationsmittelzufuhrleitung (4) aufweist, welche am Zylindermantel an diametral entgegengesetzten Stellen in die Mischkammer münden und zwar in einer Richtung, die ein in Bezug auf den Zylindermantel tangentiales Anströmen des Brennstoffs und des Oxidationsmittels bewirkt, und
- ein Leitungssystem (12) zum Zirkulieren eines Kühlfluids im Inneren des Brenners.

2. Tauchbrenner nach Anspruch 1, **dadurch gekennzeichnet, dass** er ferner auf beiden Seiten der fluchtenden Anordnung von Injektoren, in dazu paralleler und über deren gesamte Länge verlaufender Anordnung, von den Injektoren aufsteigende, massive metallische Flanken (5) umfasst.

3. Tauchbrenner nach Anspruch 2, **dadurch gekennzeichnet, dass** er ferner vertikale Schutzwände (6) umfasst, die mit den massiven metallischen Flanken (5) in Berührung stehen und sich über die Oberkante der massiven metallischen Flanken hinaus erstrecken.

4. Brenner nach einem der vorhergehenden Ansprüche, **dadurch gekennzeichnet, dass** die Brennstoff- und Oxidationsmittelzufuhrleitungen in der Nähe der Basis des Zylindermantels, vorzugsweise in seinem unteren Viertel, in den Zylindermantel münden.

5. Brenner nach einem der vorhergehenden Ansprüche, **dadurch gekennzeichnet, dass** die Brennstoffzufuhrleitungen (3) aus einer gemeinsamen Brennstoffzuleitung (7) hervorgehen und die Oxidationsmittelzufuhrleitungen (4) aus einer gemeinsamen Oxidationsmittelzuleitung (8) hervorgehen, wobei jede der Zuleitungen (7,8) eine Vorrichtung zur Steuerung der Durchflussmenge umfasst.

6. Brenner nach einem der Ansprüche 2 bis 5, **dadurch gekennzeichnet, dass** die metallischen Flanken (5) an ihrer Oberfläche eine Mehrzahl von hervorstehenden Elementen aufweisen, die vorzugsweise regelmäßig über die gesamte Oberfläche der Flanken verteilt sind.

7. Brenner nach einem der Ansprüche 2 bis 6, **dadurch gekennzeichnet, dass** die metallischen Flanken (5) eine Treppenform mit einer Mehrzahl von Stufen aufweisen.

8. Brenner nach einem der Ansprüche 2 bis 7, **dadurch gekennzeichnet, dass** er ferner an jedem der Enden der fluchtenden Anordnung der Injektoren eine aufsteigende massive metallische Flanke (9) aufweist, die mit den massiven metallischen Flanken (5), welche parallel zur fluchtenden Anordnung von Injektoren angeordnet sind, einen rechten Winkel bildet, sowie gegebenenfalls eine vertikale Schutzwand (10), die mit dieser massiven metallischen Flanke (9) in Berührung steht und sich über die Oberkante derselben hinaus erstreckt.

9. Brenner nach einem der vorhergehenden Ansprüche, **dadurch gekennzeichnet, dass** die Ausstoßöffnung (11) einen Durchmesser zwischen 2 und 20 mm, vorzugsweise zwischen 5 und 10 mm aufweist.

10. Brenner nach einem der vorhergehenden Ansprüche, **dadurch gekennzeichnet, dass** die zylinderförmige Mischkammer (2) eine Höhe zwischen 12 und 30 mm, vorzugsweise zwischen 14 und 25 mm und insbesondere zwischen 15 und 23 mm aufweist.

11. Brenner nach einem der vorhergehenden Ansprüche, **dadurch gekennzeichnet, dass** der Abstand zwischen der fluchtenden Anordnung der Injektoren und den massiven metallischen Flanken zwischen 20 und 60 mm, vorzugsweise zwischen 25 und 40 mm und idealerweise etwa 30 mm beträgt.

12. Glass- oder Steinschmelzofen mit einem Glasrohstoffeinführbereich, einem Schmelzeaustrittsbereich und - zwischen diesen Bereichen - einem Schmelzeflussbereich, wobei der Ofen im Schmelzeflussbereich mindestens einen Tauchbrenner nach einem der vorhergehenden Ansprüche aufweist, wobei der Brenner derart angeordnet ist, dass die Fluchtungsrichtung der Anordnung von Injektoren im Wesentlichen rechtwinklig zur Flussrichtung der Schmelze ist.

13. Glass- oder Steinschmelzofen nach Anspruch 12, **dadurch gekennzeichnet, dass** er metallische Wände aufweist und zumindest im Bereich der eingetauchten Bereiche im Wesentlichen frei von feuerfesten keramischen Isoliermaterialien ist.

14. Glass- oder Steinschmelzofen nach einem der Ansprüche 11 bis 13, **dadurch gekennzeichnet, dass** er mindestens ein Leitungssystem zum Zirkulieren eines Kühlfluids im Inneren der Wände des Ofens aufweist.

15. Verfahren zum Schmelzen von Glasrohstoffen unter Verwendung eines Ofens nach einem der Ansprüche 12 bis 14, wobei das Verfahren umfasst
- Einführen von Glasrohstoffen in den Glasrohstoffeinführbereich des Ofens,
- Speisen des Tauchbrenners oder der Tauchbrenner mit einem gasförmigen Brennstoff, vorzugsweise Erdgas, und mit einem gasförmigen Oxidationsmittel, vorzugsweise Sauerstoff,
- Entnehmen der Schmelze im Schmelzeaustrittsbereich, und
- Zirkulieren einer Kühlflüssigkeit, vorzugsweise Wasser, in den zu diesem Zweck in den Wänden des Ofens und/oder im Brenner vorgesehenen Leitungssystemen.

16. Verfahren zum Schmelzen von Glasrohstoffen nach Anspruch 15, **dadurch gekennzeichnet, dass** die Glasrohstoffe Gestein, vorzugsweise Basaltgestein, umfassen.

17. Verfahren zum Schmelzen von Glasrohstoffen nach Anspruch 15 oder 16, **dadurch gekennzeichnet, dass** die Temperatur des geschmolzenen Gesteins unmittelbar stromaufwärts des Glasschmelzeaustrittsbereichs zwischen 1400°C und 1600°C, vorzugsweise zwischen 1450 und 1500°C beträgt.

## Claims

1. Submerged burner (1) for a glass- or rock-melting furnace, comprising
- a plurality of in-line injectors, each injector comprising a cylinder-shaped mixing chamber (2), with an ejection orifice (11), a fuel-supply duct (3) and an oxidant-supply duct (4) opening into the mixing chamber at the cylinder jacket at diametrically opposed points in a direction causing a tangential flow of the fuel and of the oxidant relative to the cylinder jacket, and
- a duct system (12) making it possible for a coolant to flow inside the burner.

2. Submerged burner according to Claim 1, **characterized in that** it also comprises, on either side of the alignment of injectors, placed parallel to and all along the latter, solid metal sides (5) rising from the injectors.

3. Submerged burner according to Claim 2, **characterized in that** it also comprises vertical protective partitions (6) in contact with the solid metal sides (5) and extending beyond the top of the solid metal sides.

4. Burner according to any one of the preceding claims, **characterized in that** the fuel-supply duct and oxidant-supply duct open into the jacket of the cylinder close to the base of the latter, preferably in the bottom quarter of the cylinder jacket.

5. Burner according to any one of the preceding claims, **characterized in that** the fuel-supply ducts (3) branch off from a common fuel-inlet duct (7), and the oxidant-supply ducts (4) branch off from a common oxidant-inlet duct (8), each of the inlet ducts (7, 8) comprising a flow-regulating device.

6. Burner according to any one of Claims 2 to 5, **characterized in that** the metal sides (5) comprise on their surface a plurality of protruding elements preferably distributed evenly over the whole surface of the sides.

7. Burner according to any one of Claims 2 to 6, **characterized in that** the metal sides (5) have the shape of a staircase with a plurality of steps.

8. Burner according to any one of Claims 2 to 7, **characterized in that** it also comprises, at each of the ends of the alignment of injectors, a rising solid metal side (9) forming a right angle with the solid metal sides (5) placed parallel to the alignment of injectors, and optionally a vertical protective partition (10) in contact with this solid metal side (9) and extending beyond the top of the latter.

9. Burner according to any one of the preceding claims, **characterized in that** the ejection orifice (11) has a diameter of between 2 and 20 mm, preferably between 5 and 10 mm.

10. Burner according to any one of the preceding claims, **characterized in that** the cylinder-shaped mixing chamber (2) has a height of between 12 and 30 mm, preferably between 14 and 25 mm, and in particular between 15 and 23 mm.

11. Burner according to any one of the preceding claims, **characterized in that** the distance between the alignment of the injectors and the solid metal sides is between 20 and 60 mm, preferably between 25 and 40 mm, and ideally close to 30 mm.

12. Glass- or rock-melting furnace with a zone for the insertion of the vitrifiable materials, a zone for the outlet of the molten material and, between these zones, a zone for the flow of the molten material, the said furnace comprising, in the zone for the flow of the molten material, at least one submerged burner according to any one of the preceding claims, the said burner being placed so that the direction of alignment of the injectors is essentially perpendicular to the direction of flow of the molten material.

13. Glass- or rock-melting furnace according to Claim 12, **characterized in that** it has metal walls and essentially has no insulating materials made of refractory ceramics, at least in the submerged zones.

14. Glass- or rock-melting furnace according to any one of Claims 11 to 13, **characterized in that** it comprises at least one duct system making it possible for a coolant to flow inside the furnace walls.

15. Method for melting vitrifiable materials using a furnace according to any one of Claims 12 to 14, the said method comprising,
- the insertion of vitrifiable materials into the furnace zone for the insertion of vitrifiable materials,
- the supply of the submerged burner or burners with a gaseous fuel, preferably natural gas, and with a gaseous oxidant, preferably oxygen,
- the drawing off of the molten material in the zone for the outlet of the molten materials, and
- the flow of a coolant, preferably water, in the duct systems provided for this purpose in the furnace walls and/or in the burner.

16. Method for melting vitrifiable materials according to Claim 15, **characterized in that** the vitrifiable materials comprise rock, and preferably basaltic rock.

17. Method for melting vitrifiable materials according to Claim 15 or 16, **characterized in that** the temperature of the molten rock, immediately upstream of the outlet zone for the molten glass, is between 1400°C and 1600°C, preferably between 1450 and 1500°C.
